# EUROPEAN PATENT APPLICATION

(11) **EP 0 799 736 A1**
(43) Date of publication of application: **08.10.1997**
(21) Application number: 97302058.9
(22) Date of filing: 26.03.1997
(51) Int. Cl.: B60J 10/00, B60J 10/04

(54) **Sealing and guiding strips and safety systems for power-driven windows**

(30) Priority: 01.04.1996 GB 9606893
(71) Applicant: DRAFTEX INDUSTRIES LIMITED, Edinburgh EH2 3AP (GB)
(72) Inventor: Heller, Norbert, 47929 Grefrath (DE); Stockschläger, Alfons, 41749 Viersen (DE)
(74) Representative: Foster, David Martyn

(57) **Abstract**

A window channel (34) for a power-driven window glass in a motor vehicle body has lip portions (46,48) extending across its mouth, one of the lip portions (46) making initial contact with the rising window glass. Along part of the window frame, such as along a slanting part corresponding to the A-pillar of the vehicle, the lip (46) is provided with a groove (70) which increases the flexibility of the lip (46) so that it applies substantially no reactive force to the rising window glass (10). Along another part, such as the substantially horizontal top part of the frame, the lip (46) is provided with no such groove. It therefore provides a reactive force to the rising window glass (10) which increases to a peak value as the lip hinges into the channel, and then falls abruptly from this peak value. A safety system monitors the current in an electric motor raising the window glass. When this current is detected to rise to a peak corresponding to the peak value of the force, and then to fall, this indicates that the glass has entered the window channel and can be safely driven into the closed position. However, if the safety system previously detects that the current has risen to a level corresponding to a force exceeding the predetermined value, this is indicative of an obstruction and the window glass is stopped and reversed.

## Description

The invention relates to a window sealing and guiding strip for attachment to at least part of the periphery of a window frame and for sealing and guiding a pane of window glass slidable in the window frame, the strip having a part extending along the length of the strip against which the approaching edge of the window glass makes contact.

Such a strip is known, for example, from GB-A-2 150 966. In certain applications of such strips for receiving power-driven window glass, however, it is desirable to be able to detect the position of the window glass in relation to the strip.

According to the invention, the strip as first set forth above is characterised in that the said part along a first predetermined portion of the length of the strip applies a reactive force to the window glass in response to the contact which has a value which increases to a predetermined maximum peak value and then decreases therefrom in response to continued contact by the sliding window glass.

The invention also relates to a safety system for a power-driven window glass slidable in a window frame and for detecting the presence of an obstruction in the window opening, comprising a window sealing and guiding strip for attachment to at least part of the periphery of the window frame and for sealing and guiding the window glass, the strip having a part extending along the length of the strip against which the approaching edge of the window glass makes contact in a window-closing direction, an electric motor for sliding the window glass in the frame in the window-closing direction and an opposite, window-opening, direction, and detection means responsive to the electric current energising the motor for monitoring any current increase caused by a reactive force applied to the window glass moving in the window-closing direction by an obstruction. In such systems, however, it is desirable to be able to distinguish the effect of an obstruction from the effect on the motor of the window glass approaching the closed position.

According to the invention, therefore, the system as first set forth above is characterised in that the said part along a first predetermined portion of the length of the strip applies a reactive force to the window glass in response to the contact which has a value which increases to a predetermined maximum peak value and then decreases therefrom in response to continued contact by the sliding window glass, and by first control means responsive to detection by the detection means of an electric current level corresponding to a reactive force exceeding a predetermined value in excess of the predetermined maximum peak value and operative to indicate detection of a said obstruction, and second control means responsive to detection by the detecting means of an electric current corresponding to the peak value of the reactive force and operative to indicate imminent closure of the window.

Sealing and guiding strips embodying the invention for sealing and guiding power driven window glass in motor vehicle bodies, and safety systems embodying the invention for interrupting power driven movement of the window glass in the event of obstruction, will now be described, by way of example only, with reference to the accompanying diagrammatic drawings in which:
Figure 1 is a perspective view of a motor vehicle showing window frames;
Figure 2 is a block circuit diagram of a circuit for one of the systems;
Figure 3 is a graph for explaining operation of the system of Figure 2;
Figure 4 is a section, taken on the line A-A of Figure 1, showing one form which the sealing and guiding strip can take at this position;
Figure 5 is a section taken along the line B-B of Figure 1 and showing one form which the sealing and guiding strip can take at this position;
Figure 6 is a section on the line A-A of Figure 1, showing a modified form of the sealing and guiding strip at this position;
Figure 7 is a section on the line B-B of Figure 1, showing a modified form which the sealing and guiding strip can take at this position;
Figure 8 is a section on the line A-A of Figure 1, showing a further modified form of the sealing and guiding strip at this position; and
Figure 9 is a section on the line B-B of Figure 1, showing another modified form which the sealing and guiding strip can have at this position.

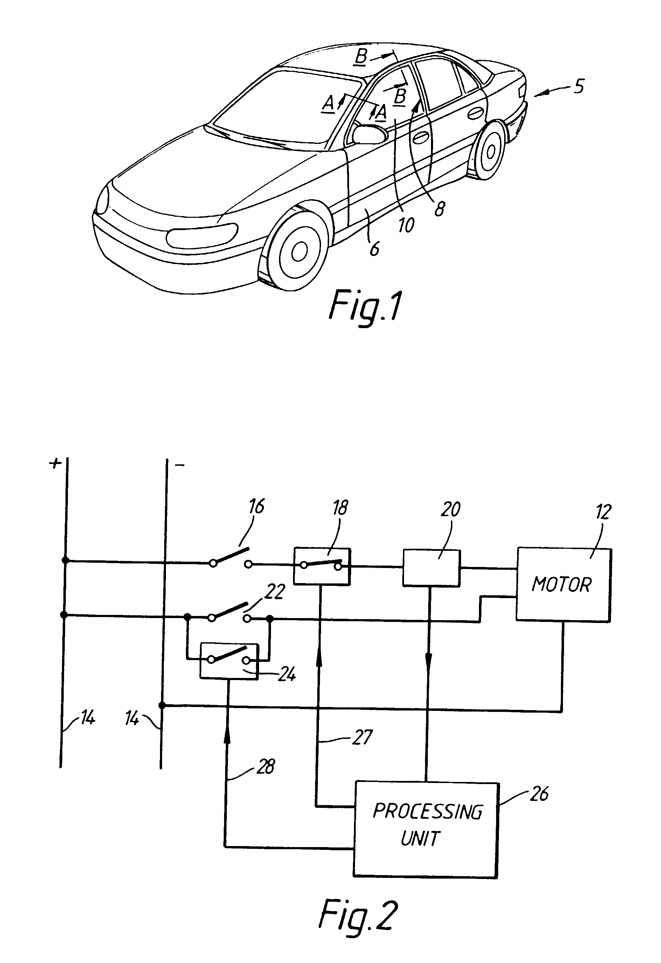

As shown in Figure 1, a vehicle body 5 has doors carrying window frames in which power-driven window glass slides in a vertical direction and can be raised from and lowered into the lower part of each door. The following description will be given with reference to the front door 6, but the disclosure relates equally to the other doors.

The door 6 carries a window frame 8 defining a window opening containing window glass 10. In a manner to be explained in more detail below, the window frame 8 is in the form of a metal channel supporting one of the sealing and guiding strips in which the window glass slides as it moves vertically, the sealing and guiding strip guiding the window glass and sealing the window opening.

Figure 2 shows a simplified block circuit diagram of the circuit for energising an electric motor 12 which raises and lowers the window glass 10. The motor 12 is energised from the vehicle's power supply indicated at 14. A switch 16 is operable by the driver or passenger to energise the motor 12 to drive the motor 12 in a glass-raising direction. The circuit path is taken through the switch 16, through a control switch 18 and through a current sensor 20 to the motor 12 and thence to the negative side of the vehicle's electrical supply. The motor 12 is energised to lower the window glass by means of a switch 22 operable by the driver or passenger, a control switch 24 being connected in parallel with the manual switch 22.

The current sensor 20 senses the instantaneous magnitude of the motor current during the window glass raising operation and this current is monitored by a processing unit 26. In a manner to be explained, an obstruction in the window opening, while the window glass is being raised by the motor 12, will cause a change in the motor current. This current change is detected by the processing unit 26. In response to such detection, the processing unit 26 opens control switch 18 by means of a signal on a line 27 and closes control switch 24 by means of a signal on a line 28. Therefore, the motor is immediately stopped and then driven in the reverse direction so as to lower the window glass away from the obstruction (which might, for example, be part of a human body).

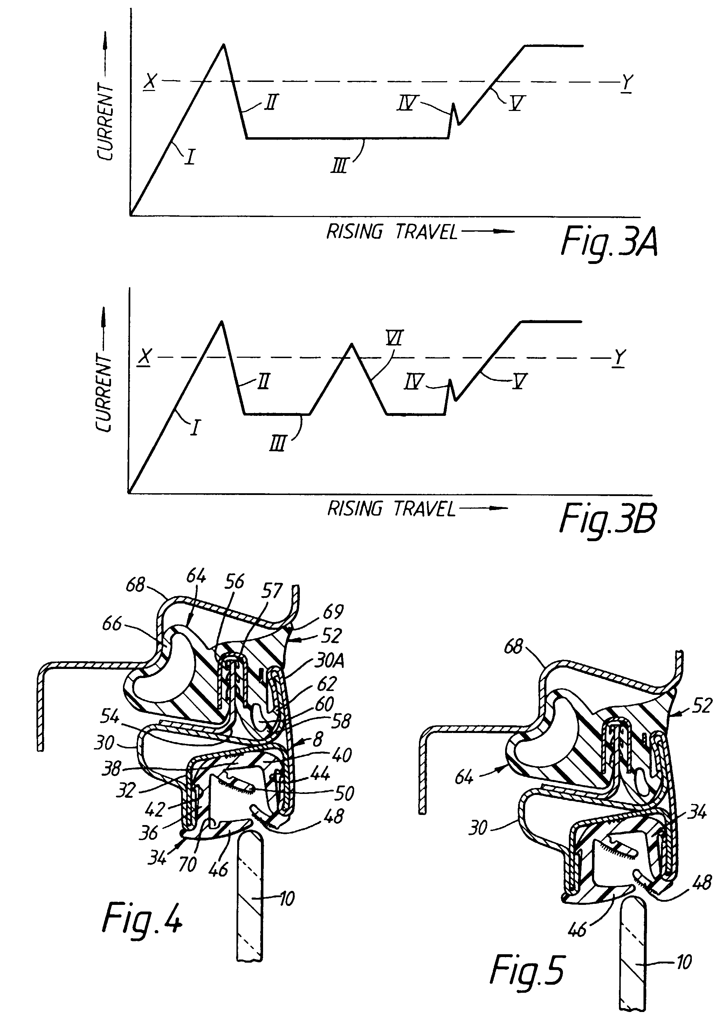

Figure 4 shows the window frame 8 along the forward, slanting edge of the door 6, adjacent the A-pillar of the vehicle body. As shown, the window frame 8 comprises an outer frame member 30 which carries an inner frame member in the form of a stiff mounting channel 32 in which is located the sealing and guiding strip 34 in the form of a window channel. The window channel 34 is preferably made of soft flexible extruded plastics or rubber material and comprises side walls 36 and 38 and a base 40. The outer faces of the side walls 36 and 38 carry projecting shoulders 42,44, near the base 40, which engage behind the distal edges of the window frame member 30 where it is bent over the side walls of the channel 32. The shoulders 42,44 thus hold the window channel 34 securely in position in the mounting channel 32.

The distal edges of the side walls 36,38 carry lips which project over the distal edges of the mounting channel 32. In addition, each of these lips has an inwardly projecting portion 46,48, the lip portions 46,48 extending partway across the mouth of the window channel.

As the window glass 10 (Fig. 4) rises, it makes contact with the lip portions 46,48, bending them inwardly of the channel 34, and then finally makes contact with a further lip 50 at the base of the channel. The glass-contacting faces of the lips 46,48 and 50 may be provided with flocked layers to provide reduced friction and better sealing.

The window frame 8 (Figure 4) also carries a door seal indicated generally at 52. The door seal 52 is mounted on the outside surface of the window frame member 30. The latter supports a flange 54 which is welded in position. The door seal 52 comprises a strip of extruded plastics or rubber material defining a channel which embracingly grips the flange 54. The extruded material defining the facing surfaces of this channel may be provided with inwardly directed lips 56 which make gripping contact with the faces of the flange 54. The lips 56 may be relatively soft to increase their frictional grip on the flange 54. A channel-shaped metal reinforcing carrier 57 may be embedded in the extruded material of the seal 52 for reinforcing its grip on the flange 54.

In addition, the door seal 52 has a clamping portion 58 which extends into a channel formed between the flange 54 and the outwardly projecting part 30A of the window frame member 30. The clamping portion 58 has a distal head incorporating a hollow chamber 60 which enables the head to be partially compressed to enable it to be inserted into this channel, whereafter it resiles so that a longitudinal shoulder 62 engages an edge formed where the window frame member 30 is folded over to define the frame part 30A.

The door seal 52 also defines a hollow longitudinally extending integral tubular part 64 having an outer wall 66 which engages against the frame 68 of the door opening when the door is closed, to provide a sealing effect. This sealing effect is complemented by a lip 69 which seals against an outer portion of the door frame 68.

The window channel 34 and the door seal 52 shown in Figures 5,6,7,8 and 9 generally correspond to the form shown in Figure 4, and corresponding parts are similarly referenced (though only the more significant parts are referenced in the other Figures to avoid unnecessary clutter). However, there are important differences between the window channels 34 shown in the various Figures and these will be described in more detail below. These differences affect the operation of the power-driven window safety system whose operation will first be described in more detail with reference, in particular, to Figure 3.

Figure 3 shows graphs plotting the current through the motor 12 on the vertical axis and the travel of the window glass, in the rising direction, on the horizontal axis. The current plotted in Figure 3 is the current as measured by the current sensor 20 (Fig. 2).

Figure 3A shows the current during normal, unobstructed, raising of the window glass.

As the window glass begins to be raised from the fully lowered position, the current increases rapidly over the region I, because of the effort required to accelerate the window glass to its normal rising speed. When this rising speed is achieved, the current falls as shown over the region II and then remains steady, at a relatively low value, over the region III as the glass continues to rise.

At some point, the window glass 10 will enter the window channel 34. Contact between the rising window glass and the window channel 34 will produce resistance to the motion of the window glass and will thus increase the current through the motor 12. In a manner to be explained, the window channel 34 is arranged to provide a small "peak" IV (Fig. 3A) in the current sensed by current sensor 20 (Fig.2). This peak IV is detected by the processing unit 26 and used to provide confirmation that the edge of the window glass has entered the window channel 34. It is now physically impossible for any obstruction to enter the window opening. The processing unit 26 therefore responds to detection of the peak IV by energising the motor 12 for a predetermined short period of time (e.g. of the order of 1 second or less) which is sufficient to drive the rising window glass fully into the window channel 34 (region V in Figure 3A). The processing unit 26 then produces a control signal on line 27 (Fig. 2) which opens control switch 18 and thus de-energises the motor.

Figure 3B corresponds to Figure 3A but shows the detected motor current in a case where an obstruction (such as insertion of part of the human body) occurs in the window opening and affects the rising movement of the window glass.

As shown in Figure 3B, the result of such an obstruction is to provide an increased resistance to the rising window glass and thus a sharp increase shown at VI in the motor current.

The dotted line X-Y in Figure 3B represents the motor current corresponding to a predetermined level of reactive force applied to the rising window glass by the obstruction. This predetermined level may, for example, correspond to a force of 80 Newtons or 100 Newtons, being the maximum force which may be exerted on an obstruction by the rising window glass under applicable regulations. The regulations provide that, in the event of this maximum force level being reached, the window glass must be stopped immediately. In the example shown at VI in Figure 3B, the force exceeds the line X-Y. This is detected by the processing unit 26 (see Figure 2) which thus immediately produces a signal on the line 27 to open control signal 18 and thus to stop the motor 12. At the same time, the processing unit 26 produces a signal on line 28 to close control switch 24. The motor is thus energised in the opposite direction to lower the window glass and enable the obstruction to be cleared.

The successful operation of the system depends, in part, on successful detection of the peak IV (Figs. 3A and 3B). This peak enables the processing unit 26 to determine that the rising window glass has entered the window channel 34. As explained above, such detection therefore confirms that no obstruction can now enter the window opening (because the edge of the window glass is inside the window channel) . Therefore, the processing unit can allow the motor 12 to continue to drive the window glass into the window channel, even though (as shown at V in Figures 3A and 3B) the motor current exceeds the level corresponding to the datum line X-Y. If the processing unit 26 could not detect entry of the window glass into the window channel (by detecting the peak IV), then of course it would respond to the increased current over the region V by stopping the motor 12 and reversing its direction.

As the window glass 10 rises from the lower part of the door 6 (see Figure 1), its forward edge will enter the window channel 34 along the slanted part of the window frame matching the A-pillar of the vehicle, and it will enter this part of the window channel before it enters the window channel running along the substantially horizontal top part of the window frame. In most cases, therefore, it is desirable to arrange for the peak IV (Figure 3B) to be generated when the window glass enters the window channel along the top part of the window opening, rather than when it enters the slanted part of the window frame along the A-pillar; in other words, no peak IV should be produced when the window glass enters the sloping part of the window channel. However, in certain circumstances, depending on the geometry of the window opening, it may be desirable to cause the peak IV to be produced when the window glass enters the sloping portion of the window channel, and not when it enters the horizontal top portion.

The window channels shown in Figures 4 and 5 are designed to produce a peak IV only when the window glass enters the substantially horizontal top portion of the window channel.

As shown in Figure 4, therefore, the lip 46, which is first contacted by the rising window glass 10 is provided with a groove 70 for increasing the flexibility of the lip 46 and thus minimising its resistance to the rising window glass. Therefore, there is substantially no increase in resistance to the rising movement of the window glass when the glass enters the channel shown in Figure 4.

However, the window channel shown in Figure 5, running along the top of the window frame, does not have any groove corresponding to the groove 70. The lip 46 is therefore relatively stiff and its stiffness is selected so as to produce a significant resistance to upward movement of the window glass 10. As the lip 46 bends in response to the continued upward movement of the window glass 10, the resistance provided by lip 46 reduces. In this way, therefore, the desired peak IV (Fig. 2B) is generated.

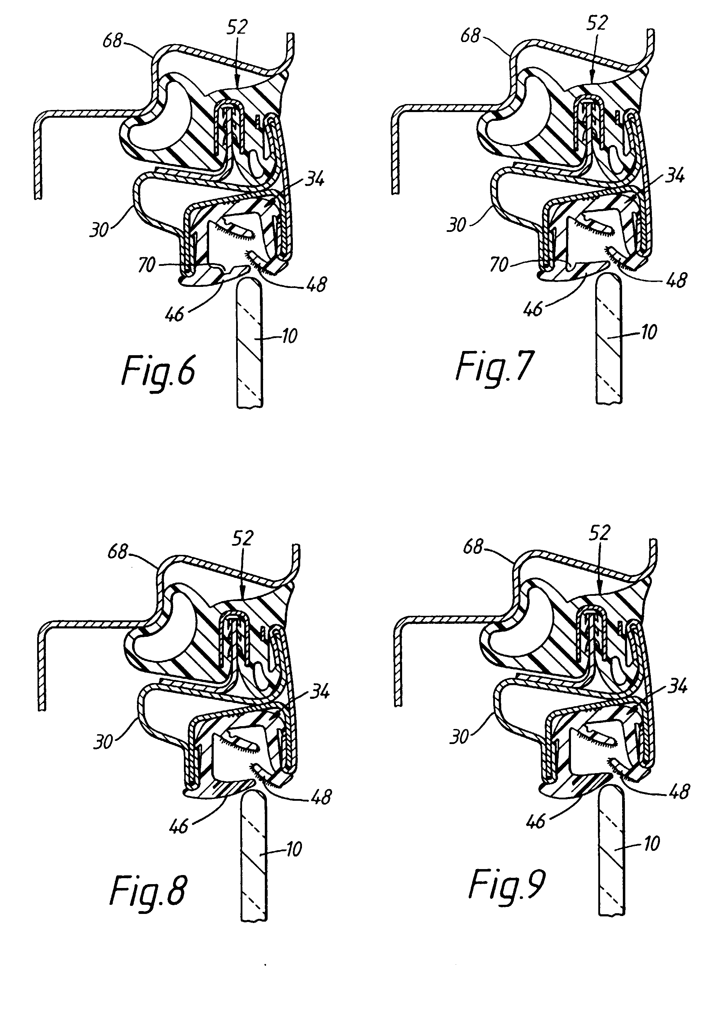

In the window channel shown in Figures 6 and 7, the groove 70 is provided continuously along the lip 46, both along that part of the window channel corresponding to the sloping A-pillar of the vehicle and along the substantially horizontal top part. However, the position of the groove 70, in relation to the root of the lip 46, varies along its length. As shown in Figure 6, the groove 70 is relatively close to the distal edge of the lip 46 along that part of the window channel corresponding to the A-pillar. As shown in Figure 7, though, the groove is positioned at the root of the lip 46 along the horizontal top portion. The effect is that the lip 46 in Figure 7 is relatively more flexible than the lip 46 shown in Figure 6. In this case, therefore, the peak IV is produced when the rising window glass enters the window channel shown in Figure 6, along the portion corresponding to the sloping A-pillar. The more flexible lip 46 of Figure 7 does not produce any significant increase in motor current. The arrangements shown in Figures 6 and 7 are therefore suitable for the case where the geometry of the window frame is such that entry of the window glass into the frame along the A-pillar portion can be taken as indicating that the window glass has also entered the window channel along the top part.

However, it will be seen that the position of the groove 70 along the length of the lip 46 could easily be altered so as to render the lip 46 in Figure 6 less stiff than the lip 46 in Figure 7.

Figures 8 and 9 show an alternative arrangement in which flexibility of the lip 46 is altered not by the provision of the groove 70 but by altering the hardness of the material of the lip. This hardness alteration may be achieved in various ways. For example, the actual hardness of the extruded material of the lip portion 46 can be varied along the length of the lip, using suitable variations in the extruded material. Instead, the flexibility of the lip 46 can be varied by varying its thickness. Thus, in Figure 8, the lip portion 46 has a relatively small thickness and the lip is therefore relatively flexible. The lip portion 46 in Figure 9, however, is much thicker and therefore less flexible. In this way, the lip 46 in Figure 8 offers little extra resistance to rising movement of the window glass 10, and the peak IV (Fig. 2B) is not produced. However, the lip 46 in Figure 9 is relatively stiff and responds to the rising window glass 10 by causing production of the peak IV.

It will be understood that other means may be provided for ensuring that the resistance of the material of the window channel to the rising window glass, along a desired portion of the window channel, is such that the peak IV is produced.

In certain cases, the geometry of the window opening may be such that the peak IV can be produced along both the slanting portion of the frame and along the substantially longitudinal top portion.

In the use of the window channel for the window opening of a rear door of the vehicle, the sloping portion of the window frame is of course the portion corresponding to the C-pillar of the vehicle.

## Claims

1. A window sealing and guiding strip (34) for attachment to at least part of the periphery of a window frame (8) and for sealing and guiding a pane of window glass (10) slidable in the window frame (8), the strip (34) having a part (46) extending along the length of the strip (34) against which the approaching edge of the window glass (10) makes contact, characterised in that the said part (46) along a first predetermined portion of the length of the strip applies a reactive force to the window glass (10) in response to the contact which has a value which increases to a predetermined maximum peak value (IV) and then decreases therefrom in response to continued contact by the sliding window glass (10).

2. A strip according to claim 1, characterised in that the said part (46) along a second portion of the length of the strip applies substantially less reactive force to the approaching edge of the window glass (10) in response to the contact.

3. A strip according to claim 1 or 2, characterised in that the peak value of the reactive force is substantially less than 100 Newtons.

4. A strip according to any preceding claim, characterised in that the reactive force decreases abruptly from the peak value.

5. A strip according to claim 2, characterised in that it is in the form of a window glass receiving channel (34) which is mountable in the said frame (8) to present its mouth to the approaching edge of the window glass (10), the said part comprising a lip (46) extending partway across the mouth of the channel.

6. A strip according to claim 5, characterised in that the reactive force applied by the lip (46) is dependent on the stiffness of the lip (46).

7. A strip according to claim 6, characterised in that the lip (46) has a first stiffness over the first portion of the length of the strip (34) and a second stiffness over the second portion of the length of the strip (34).

8. A strip according to claim 7, characterised in that the stiffness of the lip (46) depends on the position of a groove (70) in the surface of the lip (46) and which runs along a length of the strip (34), the stiffness of the lip (46) being varied by varying the position of the groove (70) in relation to the distal edge of the lip (46).

9. A strip according to claim 7, characterised in that the stiffness of the lip (46) depends upon its thickness, the thickness varying along the length of the lip (46).

10. A strip according to any one of claims 5 to 9, characterised in that the window glass receiving channel (34) is mountable in a rigid channel (32) forming the window frame (8).

11. A safety system for a power-driven window glass (10) slidable in a window frame (8) and for detecting the presence of an obstruction in the window opening, comprising a window sealing and guiding strip (34) for attachment to at least part of the periphery of the window frame (8) and for sealing and guiding the window glass (10), the strip (34) having a part (46) extending along the length of the strip (34) against which the approaching edge of the window glass (10) makes contact in a window-closing direction, an electric motor (12) for sliding the window glass (10) in the frame (8) in the window-closing direction and an Opposite, window-opening, direction, and detection means (20) responsive to the electric current energising the motor (12) for monitoring any current increase caused by a reactive force applied to the window glass (10) moving in the window-closing direction by an obstruction, characterised in that the said part (46) along a first predetermined portion of the length of the strip applies a reactive force to the window glass (10) in response to the contact which has a value which increases to a predetermined maximum peak value (IV) and then decreases therefrom in response to continued contact by the sliding window glass (10), and by first control means (26) responsive to detection by the detection means (20) of an electric current level corresponding to a reactive force exceeding a predetermined value in excess of the predetermined maximum peak value (IV) and operative to indicate detection of a said obstruction, and second control means (26) responsive to detection by the detecting means (20) of an electric current corresponding to the peak value (IV) of the reactive force and operative to indicate imminent closure of the window.

12. A system according to claim 11, characterised in that the said part (46) along a second portion of the strip (34) applies substantially no reactive force to the approaching edge of the window glass (10) in response to the contact.

13. A system according to claim 11 or 12, characterised in that the first control means (26) is operative to de-energise the motor (12).

14. A system according to claim 11 or 12, characterised in that the first control means (26) is operative to reverse the motor (12) and thereby to drive the window glass (10) in the window-opening direction.

15. A system according to any one of claims 11 to 14, characterised in that the second control means (26) is operative to energise the motor (12) for a predetermined time duration after detection by the detection means of the current corresponding to the peak value (IV) of the reactive force and then to de-energise the motor (12), whereby to arrest it in the fully closed position.

16. A system according to any one of claims 11 to 15, characterised in that the strip (34) is in the form of a window glass receiving channel (34) which is mountable in the said frame (8) to present its mouth to the approaching edge of the window glass (10), the said part comprising a lip (46) extending partway across the mouth of the channel.

17. A system according to claim 16, characterised in that the reactive force applied by the lip (46) is dependent on the stiffness of the lip (46).

18. A system according to claim 17, characterised in that the lip (46) has a first stiffness over the first portion of the length of the strip (34) and a second stiffness over the second portion of the length of the strip (34).

19. A system according to claim 18, characterised in that the stiffness of the lip (46) depends on the position of a groove (70) in the surface of the lip (46) and which runs along a length of the strip (34), the stiffness of the lip (46) being varied by varying the position of the groove (70) in relation to the distal edge of the lip (46).

20. A system according to claim 18, characterised in that the stiffness of the lip (46) depends upon its thickness, the thickness varying along the length of the lip (46).

21. A system according to any one of claims 11 to 20, characterised in that the window frame (8) is a window frame caried by a side door (6) of the motor vehicle and the window glass (10) is raisable from and lowerable into the lower part of the door.

22. A system according to claim 21, characterised in that the first predetermined portion of the length of the strip (34) is a substantially horizontal part along the top of the window frame (8).
